# FASCICULE DE BREVET EUROPEEN

(11) **EP 0 718 236 B1**
(45) Date de publication et mention de la délivrance du brevet: **02.12.1998**
(21) Numéro de dépôt: 95402919.5
(22) Date de dépôt: 22.12.1995
(51) Int. Cl.: C01B 11/06

(54) **Procédé d'amélioration de la qualité de l'hypochlorite de métal alcalin**
Verfahren zur Verbesserung der Qualität von Alkalimetallhypochlorit
Process for improving the quality of alkali metal hypochlorite

(30) Priorité: 23.12.1994 FR 9415550
(43) Date de publication de la demande: 26.06.1996
(73) Titulaire: Chloralp, 92200 Neuilly-sur-Seine (FR)
(72) Inventeur: Horbez, Dominique, F-95130 Franconville (FR)
(74) Mandataire: Wattremez, Catherine

(56) Documents cités:
- PATENT ABSTRACTS OF JAPAN vol. 005 no. 035 (C-046) ,5 Mars 1981 & JP-A-55 162405 (KUREHA CHEM IND CO LTD) 17 Décembre 1980,
- DATABASE WPI Week 7913 Derwent Publications Ltd., London, GB; AN 79-24416b & JP-A-54 021 991 (SHOWA DENKO KK) , 19 Février 1979
- DATABASE WPI Week 8033 Derwent Publications Ltd., London, GB; AN 80-58333c & SU-A-706 322 (A. M. YAROSCCHUK) , 30 Décembre 1979

## Description

La présente invention a trait à un procédé de purification de solutions d'hypochlorite de métal alcalin.

Les solutions d'hypochlorite de métal alcalin sont obtenues par réaction de chlore avec une solution d'hydroxyde du métal alcalin correspondant.

Le problème de la qualité des solutions d'hypochlorite de métal alcalin, et plus spécialement de leur coloration et de leur stabilité, est très important. En effet, la présence de certains métaux, même dans de relativement faibles proportions, tels que le fer, sont la cause de coloration très forte des solutions, pouvant aller jusqu'au noir. En ce qui concerne la stabilité de ces solutions, des métaux comme le nickel, le cuivre, le cobalt ou le manganèse, avec un seuil très faible en concentration, sont à l'origine d'une instabilité des solutions, entraînant un dégagement d'oxygène. La présence de tels métaux est donc par conséquent à minimiser afin d'éviter tout problème de ce genre. Ces métaux peuvent provenir de deux origines : de la solution d'hydroxyde de métal alcalin et/ou de la préparation de la solution d'hypochlorite.

Plusieurs possibilités sont donc connues pour améliorer la qualité de l'hypochlorite de métal alcalin, selon que l'on agit sur l'une et/ou l'autre des deux origines mentionnées.

Une première méthode consiste à préparer des solutions d'hypochlorite présentant un degré chlorométrique supérieur à 221,9 g de chlore actif par litre d'hypochlorite (soit un degré chlorométrique supérieur à 70°). Il est rappelé que le degré chlorométrique correspond au volume (exprimé en litres) de chlore utilisé pour obtenir un litre d'hypochlorite. Ainsi, dans de tels cas, la qualité de la solution est améliorée par rapport à une solution présentant un degré moindre. En effet, durant la préparation, une précipitation du chlorure de métal alcalin a lieu, pouvant également baisser la concentration des métaux responsables de la coloration et de l'instabilité de la solution par entraînement et l'on constate une baisse de la force ionique favorable à la stabilité de la solution d'hypochlorite. Il suffit alors de séparer les cristaux et de diluer la solution d'hypochlorite pour obtenir tous les degrés chlorométriques désirés.

Une seconde méthode consiste à employer des solutions d'hydroxyde de métal alcalin obtenues par électrolyse dans des cellules à mercure ou à membrane. En effet, de telles solutions présentent moins d'impuretés métalliques que des solutions obtenues par électrolyse à diaphragme.

Il est par ailleurs connu de filtrer les solutions d'hydroxyde de métal alcalin et/ou les solutions d'hypochlorite résultantes ; l'opération ayant lieu avec un écoulement frontal. Les filtres généralement employés sont des filtres à précouche d'amiante ou des cartouches de polypropylène. On peut de même utiliser des filtres comprenant des particules de PVC ou de résines synthétiques, comme décrit notamment dans la demande de brevet japonais JP 55 162405.

Cependant, si la qualité des solutions obtenues selon cette dernière méthode est améliorée, elle ne l'est toutefois pas suffisamment.

Comme on peut le constater, on ne dispose pas de procédés de purification de solutions d'hypochlorite de métal alcalin simples et suffisamment efficaces lorsque la solution d'hydroxyde du métal alcalin utilisée en tant que réactif dans la préparation de la solution d'hypochlorite a une qualité moyenne.

Par ailleurs, le procédé selon l'invention permet d'améliorer les caractéristiques de la solution d'hypochlorite lorsque celle-ci est obtenue à partir notamment de solution d'hydroxyde provenant d'une électrolyse du sel correspondant dans une cellule à mercure ou à membrane.

La présente invention a donc pour objet un procédé de purification de solutions d'hypochlorite dans lequel on traite ces solutions par filtration tangentielle sur une membrane.

On a constaté en procédant comme indiqué ci-dessus que la solution d'hypochlorite de métal alcalin présentait des caractéristiques améliorées par rapport aux procédés connus, et plus particulièrement au dernier procédé cité. En effet, il est possible d'obtenir d'une façon simple des solutions dont la teneur en fer est aussi faible que quelques milligrammes par kilogramme de solution. Par ailleurs, il est envisageable de préparer des solutions dont la teneur en nickel, par exemple, est aussi faible que 25 µg/kg de solution. De cette façon, les solutions résultantes sont au moins au même niveau de pureté que les solutions obtenues par réaction de solutions d'hydroxyde de métal alcalin issues de cellules à membranes ou à mercure.

En outre, on a constaté que d'une façon surprenante, les membranes mises en oeuvre durant la filtration ne nécessitent pas d'opérations de décolmatage après des durées importantes d'utilisation, de l'ordre du mois.

Mais d'autres avantages et caractéristiques du procédé selon l'invention apparaîtront plus clairement à la lecture de la description et des exemples qui vont suivre.

Ainsi, le procédé selon l'invention consiste à effectuer une filtration tangentielle sur une membrane, de la solution d'hypochlorite de métal alcalin. Ainsi, la solution à purifier est mise à circuler sous pression le long de la membrane.

Plus particulièrement, on met en oeuvre des membranes dont la taille des pores est inférieure à 2 µm.

Selon un mode de réalisation plus particulier de l'invention, on met en oeuvre des membranes dont la taille des pores est comprise entre 100 nm (10 angströms) (soit un seuil de coupure équivalent de 0,5 KDaltons) à 0,2 µm.

Une variante préférée de l'invention consiste à employer une membrane dont le seuil de coupure est compris entre 3 KD et 2000 KD.

Ce type de filtration mettant en jeu des membranes présentant cette gamme de seuil de coupure fait partie des techniques séparatives dont la force motrice du transfert est un gradient de pression.

Les membranes peuvent se présenter sous une forme homogène, asymétrique ou composite. Une membrane est dite asymétrique lorsque la couche permsélective ne représente qu'une partie de l'épaisseur de la membrane, alors qu'une membrane homogène constitue dans son ensemble la couche permsélective. Un type particulier de membrane asymétrique est constitué par une couche permsélective déposée sur un support préexistant.

Toutes les membranes organiques ou minérales conviennent à la mise en oeuvre du procédé selon l'invention, dans la mesure où elles sont stables dans des milieux basiques et oxydants, tels que des solutions d'hypochlorite de métal alcalin.

A titre d'exemple de membranes minérales convenables au procédé selon l'invention, on peut citer notamment les membranes comprenant, seul ou en mélange, de l'alumine, du dioxyde de zirconium, du carbure de silicium, du dioxyde de titane, du carbone, déposées sur un support d'alumine, de dioxyde de titane, de carbure de silicium, de carbone, ces composés étant seuls ou en combinaison. Ces types de membranes sont bien connus et se trouvent dans le commerce. Ainsi, on dispose de membranes à base de zircone déposées sur un support de carbone (Carbosep®, commercialisée par Tech Sep), de membranes à base de dioxyde de titane ou de zirconium déposés sur de l'alumine et du dioxyde de titane (Kerasep®, commercialisée par Tech-Sep), de membranes à base d'alumine sur un support d'alumine (Anopore® commercialisée par Anotech/Alcan), ou encore de membranes à base d'un mélange alumine-zircone déposé sur un support d'alumine (Membralox® commercialisée par Société des Céramiques Techniques).

A titre de membranes organiques susceptibles d'être mises en oeuvre dans le procédé selon l'invention, on peut citer les membranes à base de fluorure de polyvinylidène, de polytétrafluoroéthylène, de polyaryléthersulfone, de polyaryléthersulfone sulfonée, de copolymères d'acrylonitrile. A titre de membrane en fluorure de polyvinylidène, on peut citer la membrane Iris 3065® commercialisée par la société Tech-Sep.

La membrane peut se trouver indifféremment sous toutes les configurations possibles. Ainsi, on peut mettre en oeuvre des membranes sous forme plane, spiralée, tubulaire ou sous forme de fibres creuses.

La filtration de la solution d'hypochlorite de métal alcalin est effectuée à une température comprise entre 0 et 40 °C, et plus particulièrement entre 15 et 30 °C. Il est à noter que cette gamme n'est donnée qu'à titre indicatif. En effet, l'effet de la température sur la viscosité et la stabilité de la solution est opposé : la viscosité diminue avec une augmentation de la température, ce qui est favorable à la filtration selon l'invention, mais lorsque la température augmente, les risques de dégradation de la solution d'hypochlorite en un mélange de chlorates et de chlorures, augmentent de même. C'est pourquoi le choix de la température de filtration doit être plus particulièrement fait en fonction du compromis à atteindre entre la viscosité et la stabilité de la solution à traiter.

L'appareillage dans lequel est effectuée la filtration de la solution d'hypochlorite est classique et le matériau est de préférence choisi parmi le polychlorure de vinyle, le polypropylène, le fluorure de polyvinylidène, le titane, l'acier ébonité ou tout autre matériau qui ne se corrode pas dans les conditions de filtration.

Ainsi que cela a été mentionné auparavant, la solution d'hypochlorite est obtenue par réaction de chlore avec de I'hydroxyde du métal alcalin correspondant, en mettant en oeuvre des moyens connus de l'homme du métier. Ainsi, on effectue en général cette réaction par absorption à contre courant des réactifs dans une colonne.

Selon un mode particulier de réalisation de l'invention, le métal alcalin est choisi parmi le sodium et le potassium, le sodium étant préféré.

La présente invention peut être mise en oeuvre pour tout type de solution d'hypochlorite de métal alcalin, quel que soit le degré chlorométrique de la solution. Toutefois, cette méthode est particulièrement avantageuse pour des solutions d'hypochlorite dont le degré chlorométrique est inférieur à 221,9 g de chlore actif par litre d'hypochlorite (ou bien un degré chlorométrique inférieur à 70°) et de préférence inférieur à 206,05 g de chlore actif par litre d'hypochlorite (ou bien un degré chlorométrique inférieur à 65°).

Si la solution d'hypochlorite à traiter comprend des impuretés dont la taille ou les teneurs sont élevées, alors il peut être intéressant d'effectuer préalablement à la filtration avec une membrane selon l'invention, une filtration classique, par exemple sur un filtre à précouche ou sur une cartouche en polypropylène.

La solution d'hydroxyde employée pour préparer la solution d'hypochlorite peut être obtenue par tout moyen connu de l'homme du métier. On peut ainsi utiliser des solutions d'hydroxyde de métal alcalin obtenues par électrolyse de solution de chlorure dudit métal alcalin dans une cellule à mercure, à membrane.

Selon une variante particulière de réalisation de l'invention, on met en oeuvre une solution d'hydroxyde de métal alcalin provenant d'une cellule à diaphragme, pour la préparation de la solution d'hypochlorite.

Selon un mode de réalisation avantageux de l'invention, on peut traiter des solutions d'hypochlorite de métal alcalin dites "fatales". De telles solutions sont qualifiées ainsi lorsque des installations industrielles exploitant des procédés dans lesquels le chlore est l'un des constituants, utilisent comme piège à chlore des solutions d'hydroxyde de métal alcalin, pour des raisons de sécurité, d'environnement ou de spécifications. Par exemple, ce type de méthode est en général mis en oeuvre dans des installations d'électrolyse de chlorure de sodium pour la préparation de la soude.

Dans les deux derniers cas, et si la solution d'hydroxyde de métal alcalin n'a pas été préalablement purifiée avant la mise en contact avec le chlore, on préfère utiliser des membranes dont la taille des pores est inférieure ou égale à 0,2 µm ou plus particulièrement inférieure ou égale à 0,1 µm. De préférence, on emploie des membranes dont le seuil de coupure est compris entre 3 et 2000 KD.

Dans les cas où la solution d'hydroxyde de métal alcalin, préalablement à la mise en contact avec le chlore, présente une bonne pureté (en d'autres termes quand la solution provient de procédés d'électrolyse à mercure ou à membrane, ou qu'elle a été purifiée avant ladite mise en contact), la filtration de la solution d'hypochlorite résultante peut être réalisée par passage sur une membrane dont le seuil de coupure couvre toute la gamme indiquée auparavant. Ainsi, on peut effectuer la filtration avec une membrane dont la taille des pores est inférieure à 2 µm et plus particulièrement comprise entre 100 nm (10 angströms) et 0,2 µm.

La solution d'hydroxyde de métal alcalin peut être utilisée sous une forme brute ou bien sous une forme purifiée. Dans le cas où elle est utilisée sous une forme purifiée, on peut citer notamment les méthodes électrochimiques de purification de la solution. Ainsi, on peut effectuer celle-ci dans une cellule comprenant, en tant que cathode, des cylindres creux en carbone graphite.

Il est de même possible d'employer des cellules dont la cathode comprend une nappe fibreuse obtenue à partir d'un mélange de libres dont au moins une fraction est constituée de fibres conductrices de l'électricité, d'un polymère liant les fibres, éventuellement associée à un diaphragme ou à une membrane.

La nappe fibreuse précitée est donc obtenue à partir d'un mélange de fibres conductrices de l'électricité, choisies parmi les libres de carbone ou de graphite.

Le mélange peut comprendre par ailleurs des fibres non conductrices, organiques ou minérales.

Ainsi, le mélange de fibres peut comprendre des fibres à base d'un polymère fluoré tel que le polytétrafluoroéthylène. Ledit mélange peut en outre comprendre des fibres à base de cellulose, de préférence associées avec un polymère cationique tel que l'amidon cationique, ou bien encore des fibres à base de cellulose auxquelles on a donné une charge ionique positive (comme les fibres Becofloc®, commercialisées par la société Beco), elles-mêmes pouvant être associées à un polymère cationique comme l'amidon cationique. Bien entendu, ces fibres organiques peuvent être utilisées seules ou en mélange.

Le mélange à partir duquel la nappe fibreuse est obtenu peut comprendre par ailleurs des fibres minérales comme les fibres de titanates, des fibres céramiques, telles que des fibres de dioxyde de zirconium, de carbure de silicium ou encore de nitrure de bore.

Le mélange des fibres précitées comprend en outre un polymère fluoré pour les lier entre elles lors de l'étape de frittage.

De préférence, le mélange comprend de plus des additifs tels que les agents porogènes comme la silice, des tensioactifs choisis plus particulièrement parmi les composés non ioniques tels que les alcools éthoxylés, ou encore tels que les agents épaississants, correspondants à des substances susceptibles d'augmenter la viscosité du mélange de libres et qui présentent des propriétés rétentrices d'eau, comme par exemple la gomme xanthane faisant partie des biopolymères.

Selon un mode particulier de réalisation du mélange fibreux, on utilise de 20 à 80 parties en poids sec de fibres conductrices, de préférence de 20 à 40, et de 20 à 100 parties en poids sec de fibres non conductrices organiques. On peut utiliser 0 à 50 parties en poids sec de polymère cationique, tel que l'amidon cationique. La suspension peut comprendre en outre 10 à 100 parties en poids sec de fibres non conductrices minérales. Plus particulièrement, la suspension peut comprendre 20 à 60 parties en poids sec de fibres minérales non conductrices.

La teneur en polymère fluoré liant les fibres est en général comprise entre 10 à 60 parties en poids sec.

La suspension mise en oeuvre dans le procédé selon l'invention comprend habituellement de 30 à 200 parties en poids sec d'au moins un agent porogène. Selon un mode particulier la teneur en agent porogène est de 30 à 100 parties en poids sec.

La teneur en agent épaississant varie en général entre 0 et 30 parties en poids sec. Plus particulièrement elle est de 0 à 10 parties en poids sec.

Enfin la suspension comprend le plus souvent au plus 10 parties en poids sec d'au moins un tensioactif, et plus particulièrement une teneur comprise entre 0,5 et 5 parties en poids sec.

La cathode est donc obtenue par dépôt sous vide de la suspension aqueuse comprenant le mélange de fibres précitées, le liant et les additifs requis, sur une grille présentant des ouvertures de tailles contrôlée. Une fois déposé le mélange sur la grille, on sèche l'ensemble puis on effectue une opération de frittage à une température supérieure ou égale au point de ramollissement ou de fusion du polymère liant les fibres.

Ce type de cathode et son utilisation pour purifier notamment des solutions d'hydroxyde de métaux alcalins de pH supérieur à 14 ont notamment été décrits dans la demande de brevet français FR 94 14122 déposée le 21/11/94.

Le procédé selon l'invention permet d'obtenir des solutions d'hypochlorite de métal alcalin dont la teneur en métaux est inférieure à quelques milligrammes par kilogramme de solution. Plus particulièrement, et pour ce qui concerne le fer et les métaux responsables d'une baisse de la stabilité de la solution d'hypochlorite, tels que le nickel, on peut atteindre des teneurs en fer de l'ordre de 2 mg/kg et des teneurs en nickel inférieures à 25 µg/kg. Il est à noter que la détection de teneurs aussi faibles que celles indiquées ci-dessus est relativement difficile car le seuil de détection des méthodes classiques d'analyse, comme l'ICP (plasma) est plus élevé que les teneurs effectives dans la solution à analyser. C'est pourquoi on préfère décrire les caractéristiques de la solution d'hypochlorite de métal alcalin par le dégagement d'oxygène lorsqu'un certain volume est chauffé, ce dégagement étant plus particulièrement représentatif de la quantité en métal déstabilisant, tel que le nickel, le cuivre notamment, dans la solution, ainsi que l'évaluation de la densité optique de la solution, plus spécialement représentative de la teneur en fer. La mise en oeuvre de ces méthodes sera décrite dans les exemples qui vont suivre.

Ainsi, le procédé selon l'invention permet d'obtenir des solutions d'hypochlorite de métal alcalin dont le dégagement d'oxygène est plus faible que 12%, et pouvant être aussi faible que 6 %. En ce qui concerne la coloration, le procédé permet d'obtenir des solutions d'hypochlorite dont la densité optique est inférieure à 0,1.

Des exemples représentatifs mais non limitatifs de l'invention vont maintenant être présentés.

### EXEMPLES

Dans ces exemples, les propriétés de la solution d'hypochlorite ont été déterminées par les tests suivants :
***1/ test de gonflement :*** ce test permet de mesuré le dégagement d'oxygène et d'apprécier par conséquent la stabilité de la solution.
   Il consiste à tester un échantillon de solution d'hypochlorite dont le degré chlorométrique a été si nécessaire ramené à 158,5 g de chlore actif par litre d'hypochlorite (ou bien un degré chlorométrique de 50°) par dilution avec de l'eau permutée.
   On place donc un échantillon de 100 ml à 60 °C et l'on mesure le volume gazeux dégagé pendant 3 heures, entre les temps 10 et 190 minutes.
   Les résultats sont ramenés aux conditions standard (0°C et 1013 mbar) et sont donnés en pour-cent. Ils correspondent au volume d'oxygène dégagé pour 100 ml de la solution.
   Ces résultats sont donc représentatifs de la teneur en nickel (ou des autres métaux déstabilisants) présent dans la solution d'hypochlorite.
***2/ test de coloration :*** ce test consiste à mesurer la densité optique, en cuve de 100 mm, à une longueur d'onde de 500 nm ; la cuve de référence contient de l'eau déminéralisée.

### EXEMPLE 1 COMPARATIF

Un extrait d'hypochlorite de sodium à 161,67 g de chlore actif par litre d'hypochlorite (soit un degré chlorométrique de 51) a été préparé par absorption d'un volume de chlore approprié et de soude issue de l'électrolyse d'une solution de chlorure de sodium dans une cellule à diaphragme, préalablement diluée de 50 % à 20 %.

La solution résultante a été filtrée sur une cartouche en polypropylène dont la taille des pores est de 5 µm, par écoulement frontal.

Après analyse, on constate que le dégagement en oxygène est de 41,3 % et la densité optique de 0,23. Ces résultats bien que largement améliorés par rapport à la solution d'hypochlorite de sodium non filtrée ne sont toutefois pas suffisants pour permettre le conditionnement en dose de la solution résultante.

### EXEMPLE 2 COMPARATIF

Une solution de soude issue de l'électrolyse d'une solution de chlorure de sodium dans une cellule à diaphragme, est diluée de 50 % à 20 %, puis filtrée sur une cartouche en fluorure de polyvinylidène présentant une taille des pores de 0,2 µm, par filtration frontale.

La soude ainsi traitée est ensuite mise en contact avec un volume de chlore approprié pour obtenir une solution d'hypochlorite de sodium dont le degré chlorométrique est de 158,5 g de chlore actif par litre d'hypochlorite (ou bien un degré chlorométrique de 50°).

Après analyse, on constate que le dégagement en oxygène est de 12,1 % et la densité optique de 0,47.
Ces résultats ne sont pas suffisants pour permettre le conditionnement en dose de la solution résultante.

### EXEMPLE 3

Le présent essai a été réalisé dans un module Kerasep K01-W®. (commercialisé par la société Tech-Sep).

Les caractéristiques du module sont les suivantes :
- longueur: 856 mm
- 1 tube de 20 mm de diamètre:
- nombre des canaux: 19
- diamètre de canaux: 2,5 mm
- surface filtrante: 0,12 m²
- débit de circulation à 1 m/s: 0,34 m³/h

La membrane employée est en céramique (ZrO₂ ou TiO₂) déposée sur un monolithe en Al₂O₃ - TiO₂. Le seuil de coupure est de 300 KD.

Une solution d'hypochlorite à 161,67 g de chlore actif par litre d'hypochlorite (soit un degré chlorométrique de 51), est traitée selon un fonctionnement tangentiel. Elle est introduite sous pression dans le tube contenant la membrane La pression transmembranaire moyenne est de 2,25 bar. Le débit de recirculation dans la boucle est de 1 m³/h.

Le perméat est soumis aux deux tests de gonflement et de coloration.

Les résultats sont indiqués ci-dessous :

| | **solution brute** | **solution ultrafiltrée** |
|---|---|---|
| **Test de gonflement (%)** | 41 | 11 |
| **coloration** | 0,2 | 0,08 |

Ces essais ont par ailleurs été menés en continu pendant une durée d'un mois dans le même appareillage.

Il sont été menés à une pression moyenne de 2 bar et avec un débit de recirculation de 1,8 m³/h.

Les résultats en moyenne correspondent à ceux du tableau précédent. En effet, le dégagement d'oxygène est inférieur à 9 % et la densité optique est de 0,09.

Par ailleurs, on a constaté d'une façon surprenante que la membrane n'était pas colmatée au bout de cette durée, ce qui est tout à fait surprenant.

### EXEMPLE 4

On procède comme dans l'exemple 3 excepté le fait que la membrane utilisée présente un seuil de coupure de 15 KD (membrane ZrO₂ ou TiO₂ déposée sur un monolithe Al₂O₃-TiO₂).

Les conditions expérimentales sont les suivantes :
la solution d'hypochlorite de sodium traitée est à 158,5 g de chlore actif par litre d'hypochlorite (soit un degré chlorométrique de 50).
La pression transmembranaire est de 2,2 bar et le débit de recirculation dans la boucle est de 1,8 m³/h.

Après analyse du perméat, on obtient les résultats suivants :

| | **solution brute** | **solution ultrafiltrée** |
|---|---|---|
| **Test de gonflement (%)** | 35 | 10 |
| **coloration** | 0,42 | 0,07 |

## Revendications

1. Procédé de purification de solutions d'hypochlorite de métal alcalin par filtration tangentielle sur une membrane dont la taille des pores est inférieure à 2 µm.

2. Procédé selon la revendication précédente, caractérisé en ce que l'on effectue la filtration au moyen d'une membrane dont la taille des pores varie de 100 nm (10 angströms), soit un seuil de coupure équivalent de 0,5 KDaltons, à 0,2 µm.

3. Procédé selon l'une quelconque des revendications précédentes, caractérisé en ce que l'on effectue la filtration au moyen d'une membrane dont le seuil de coupure est compris entre 3 KD et 2000 KD.

4. Procédé selon l'une quelconque des revendications précédentes, caractérisé en ce que l'on effectue le traitement avec une membrane minérale à base, seuls ou en mélange, d'alumine, de zircone, de carbure de silicium, de carbone, déposée sur un support d'alumine, de carbure de silicium, ou de carbone, ces composés étant seuls ou en combinaison.

5. Procédé selon l'une quelconque des revendications 1 à 3, caractérisé en ce que l'on effectue la traitement avec une membrane organique à base de polyaryléthersulfone, de polyaryléthersulfone sulfonée, de fluorure de polyvinylidène, de polytétrafluoroéthylène, de copolymères d'acrylonitrile.

6. Procédé selon l'une quelconque des revendications précédentes, caractérisé en ce que la solution d'hypochlorite à purifier est obtenue par réaction de chlore avec une solution d'hydroxyde de métal alcalin, ladite solution d'hydroxyde de métal alcalin ayant été, préalablement à la réaction, purifiée par voie électrochimique.

7. Procédé selon la revendication précédente, caractérisé en ce que la solution d'hydroxyde de métal alcalin a été, préalablement à la réaction, purifiée par voie électrochimique dans une cellule dont la cathode comprend une nappe fibreuse obtenue à partir d'un mélange de fibres dont au moins une fraction est constituée de fibres conductrices de l'électricité, d'un polymère liant les fibres, la nappe fibreuse étant éventuellement associée à un diaphragme ou à une membrane.

8. Procédé selon la revendication précédente, caractérisé en ce que l'hypochlorite de métal alcalin présente un degré chlorométrique inférieur à 221,9 g de chlore actif par litre d'hypochlorite (ou bien un degré chlorométrique inférieur à 70°).

## Claims

1. Process for the purification of alkali metal hypochlorite solutions by tangential filtration through a membrane, the size of the pores of which is less than 2 µm.

2. Process according to the preceding claim, characterized in that the filtration is carried out by means of a membrane, the size of the pores of which varies from 100 nm (10 angströms), i.e. a cutoff threshold equivalent to 0.5 kdaltons, to 0.2 µm.

3. Process according to either one of the preceding claims, characterized in that the filtration is carried out by means of a membrane for which the cutoff threshold is between 3 KD and 2000 KD.

4. Process according to any one of the preceding claims, characterized in that the treatment is carried out with an inorganic membrane based, alone or as a mixture, on alumina, on zirconia, on silicon carbide, on carbon, deposited on an alumina support, on silicon carbide or on carbon, these compounds being alone or in combination.

5. Process according to any one of claims 1 to 3, characterized in that the treatment is carried out with an organic membrane based on polyarylethersulphone, on sulphonated polyarylethersulphone, on poly(vinylidene fluoride), on polytetrafluoroethylene or on acrylonitrile copolymers.

6. Process according to any one of the preceding claims, characterized in that the hypochlorite solution to be purified is obtained by reaction of chlorine with an alkali metal hydroxide solution, the said alkali metal hydroxide solution having been purified electrochemically prior to the reaction.

7. Process according to the preceding claim, characterized in that the alkali metal hydroxide solution has been purified electrochemically, prior to the reaction, in a cell, the cathode of which comprises a fibrous sheet obtained from a mixture of fibres, at least a fraction of which is composed of electrically conducting fibres, and from a polymer binding the fibres, the fibrous sheet optionally being used in combination with a diaphragm or with a membrane.

8. Process according to the preceding claim, characterized in that the alkali metal hypochlorite exhibits a chlorometric degree of less than 221.9 g of active chlorine per litre of hypochlorite (or else a chlorometric degree of less than 70°).

## Patentansprüche

1. Verfahren zur Reinigung von Alkalimetallhypochloritlösungen durch tangentiale Filtration über eine Membran, deren Porengröße unter 2 µm beträgt.

2. Verfahren nach dem vorangegangenen Anspruch, dadurch gekennzeichnet, daß man die Filtration mittels einer Membran bewirkt, deren Porengröße von 100 nm (10 Angström), entsprechend einer Ausschlußgrenze von 0,5 kDalton, bis 0,2 µm variiert.

3. Verfahren nach einem der vorangegangenen Ansprüche, dadurch gekennzeichnet, daß man die Filtration mittels einer Membran bewirkt, deren Ausschlußgrenze zwischen 3 kD und 2000 kD beträgt.

4. Verfahren nach einem der vorangegangenen Ansprüche, dadurch gekennzeichnet, daß man die Behandlung mit einer mineralischen Membran auf Grundlage von, allein oder in einer Mischung, Aluminiumoxid, Zirconiumdioxid, Siliciumcarbid, Kohlenstoff, abgeschieden auf einem Träger aus Aluminiumoxid, Siliciumcarbid oder Kohlenstoff, wobei diese Verbindungen allein oder in Kombination vorliegen, vornimmt.

5. Verfahren nach einem der Ansprüche 1 bis 3, dadurch gekennzeichnet, daß man die Behandlung mit einer organischen Membran auf Grundlage von Polyarylethersulfon, sulfoniertem Polyarylethersulfon, Polyvinylidenfluorid, Polytetrafluorethylen und Copolymeren von Acrylnitril vornimmt.

6. Verfahren nach einem der vorangegangenen Ansprüche, dadurch gekennzeichnet, daß die zu reinigende Hypochloritlösung durch Umsetzung von Chlor mit einer Lösung von Alkalimetallhydroxid erhalten wird, wobei die Lösung von Alkalimetallhydroxid vor der Umsetzung auf elektrochemischem Wege gereinigt worden ist.

7. Verfahren nach dem vorangegangenen Anspruch, dadurch gekennzeichnet, daß die Lösung von Alkalimetallhydroxid vor der Umsetzung auf elektrochemischem Wege in einer Zelle gereinigt worden ist, deren Kathode eine Faser Schicht umfaßt, das ausgehend von einer Mischung von Fasern erhalten wird, von denen mindestens ein Teil aus elektrisch leitenden Fasern und aus einem die Fasern verbindenen Polymer gebildet wird, wobei die Faser Schicht gegebenenfalls mit einem Diaphragma oder einer Membran verbunden ist.

8. Verfahren nach dem vorangegangenen Anspruch, dadurch gekennzeichnet, daß das Alkalimetallhypochlorit einen chlorometrischen Gehalt unter 221,9 g aktivem Chlor pro Liter Hypochlorit (oder auch einen chlorometrischen Gehalt unter 70°) aufweist.
